# EUROPÄISCHE PATENTSCHRIFT

(11) **EP 4 065 900 B1**
(45) Veröffentlichungstag und Bekanntmachung des Hinweises auf die Patenterteilung: **09.07.2025**
(21) Anmeldenummer: 20808373.3
(22) Anmeldetag: 17.11.2020
(51) Int. Cl.: F24D 13/02, G05D 23/19, H05B 3/20

(54) **SCHNELL AUFHEIZBARES ELEKTRISCHES FLÄCHENHEIZ SYSTEM UND BETRIEBSVERFAHREN**
FAST HEATABLE ELECTRIC SURFACE HEATING SYSTEM AND METHOD FOR OPERATING THE SAME
SYSTÈME DE CHAUFFAGE DE SURFACE ÉLECTRIQUE À CHAUFFAGE RAPIDE ET PROCÉDÉ DE SON OPÉRATION

(30) Priorität: 25.11.2019 DE 102019131881
(43) Veröffentlichungstag der Anmeldung: 05.10.2022
(73) Patentinhaber: KE KELIT GmbH, 4020 Linz (AT)
(72) Erfinder: HUNZIKER, Urs, 8706 Meilen (CH); WURMITZER, Maximilian Johannes, 1120 Wien (AT); EGGER, Karl, 4020 Linz (AT)
(74) Vertreter: Dilg, Haeusler, Schindelmann Patentanwaltsgesellschaft mbH
(86) Internationale Anmeldenummer: PCT/EP2020/082430
(87) Internationale Veröffentlichungsnummer: WO 2021/104947

(56) Entgegenhaltungen:
- EP-A1- 1 870 642
- EP-A1- 3 481 144
- WO-A1-2019/184714
- CA-A- 651 626
- CN-A- 110 520 194
- DE-A1- 102011 103 705
- DE-A1- 3 115 242
- DE-C1- 4 324 586
- DE-U1- 202017 106 881
- US-A- 3 005 896
- US-A- 3 984 578
- US-A1- 2007 221 645

## Beschreibung

Die Erfindung betrifft ein elektrisches Flächenheiz System für den Baubereich mit einer elektrischen Flächenheizung und einer Steuereinheit. Weiterhin betrifft die Erfindung ein Verfahren zum Betreiben eines elektrischen Flächenheiz Systems. Ferner betrifft die Erfindung ein Heizgesamtelement für ein elektrisches Flächenheiz System oder eine elektrische Flächenheizung. Weiterhin betrifft die Erfindung ein Computerprogramm Produkt und ein gemeinsames Verwenden eines Heizkabels und eines selbstbegrenzenden Heizkabels.

Die Erfindung kann sich somit auf das technische Gebiet von Heizsystemen, insbesondere elektrischen Flächenheiz Systemen, beziehen.

Im Rahmen von Energieoptimierungen im Baubereich werden Systeme zur schnellen Temperaturveränderung und Temperaturanpassung verwendet und benötigt. Prinzipiell kann viel Energie eingespart werden, wenn temporär ungenutzte Räume nicht beheizt werden. Diese Praxis wird aber häufig nicht akzeptiert, denn sobald die betreffenden Räume genutzt werden sollen, ist zunächst ein langwieriges Aufheizen notwendig. Konventionelle elektrische Schnellheizsysteme wählen oft einen sehr dünnen (in Höhenrichtung z) Systemaufbau, um so die Energie rasch an die Oberfläche zu bringen. Insbesondere bei elektrischen Flächenheizungen darf aber aus Sicherheitsgründen die Oberflächentemperatur im Wohn- oder Arbeitsbereich einen gewissen Maximalwert nicht überschreiten. Dies limitiert deutlich die Geschwindigkeit der Aufheizung eines Raumes, wenn der Raum von einem ersten Betriebszustand "kühl" (z.B. unbenutztes Badezimmer) in einen zweiten Betriebszustand "warm" (z.B. Badezimmer benutzt) übergeführt werden soll. Beim Herstellen einer elektrischen Flächenheizung sind die späteren Bedingungen im verlegten Zustand (insbesondere Beschaffenheit zwischen dem eigentlichen Heizelement und der Oberfläche) nicht bekannt. Somit wird die Heizleistung stets konservativ ausgelegt, was einer schnellen Aufheizung entgegensteht. Ferner werden in elektrischen Flächenheizungen selbstbegrenzende Heizkabel verwendet, welchen es inhärent ist, dass sie keine schnelle Aufheizung tolerieren.

EP 3 481 144 A1 beschreibt eine Doppelheizung, welche vorheizt und eine verbesserte Leistung bei sogenannten "rush-in" Ereignissen aufweist. Die Doppelheizung beinhaltet ein Heizkabel. Das Heizkabel weist eine erste Heizung auf, welche zwei elektrische Leiter aufweist, zwischen welchen ein PTC-Material angeordnet ist.

DE 202017 106881 U1 beschreibt eine elektrische Fußbodenheizung mit einem bekannten selbstbegrenzenden Heizkabel, welches in einem Modulkörper eingebettet ist und von einer Lastverteilschicht bedeckt ist.

WO 2019/184714 A1 beschreibt verschiedene Möglichkeiten, eine modulare Bodenheizung zu gestalten. Es werden u.a. Heizkabel und selbstbegrenzende Heizkabel erwähnt.

DE 10 2011 103705 A1 beschreibt eine elektrische Flächenheizvorrichtung, welche zwei oder mehr Heizleiter aufweist, welche unabhängig voneinander und zeitlich begrenzt mit Spannung bzw. elektrischem Strom beaufschlagt werden können. Die beschriebene Flächenheizvorrichtung umfasst kein selbstbegrenzendes Heizelement.

Es ist eine Aufgabe der vorliegenden Erfindung, ein elektrisches Flächenheiz System bereitzustellen, welches ein schnelles Aufheizen (bzw. einen initialen Wärmestoss) erlaubt, aber zugleich sicher und zuverlässig ist.

Diese Aufgabe wird mit den Gegenständen der unabhängigen Ansprüche gelöst. Vorteilhafte Ausgestaltungen ergeben sich aus den abhängigen Ansprüchen.

Gemäß der vorliegenden Erfindung ist ein elektrisches Flächenheiz System zum Einsatz im Baubereich beschrieben. Das System (bzw. die Anordnung) weist auf: i) eine elektrische Flächenheizung, welche ein Heizelement (insbesondere ein Heizkabel) aufweist, und ii) eine Steuereinheit (z.B. ein Computer, ein Computersystem, ein Prozessor), welche mit der elektrischen Flächenheizung gekoppelt ist, und welche konfiguriert ist eine Energie-Zufuhr (insbesondere Zufuhr elektrischer Energie) zu der elektrischen Flächenheizung zu steuern (beispielsweise findet die Energiezufuhr über ein Stromkabel statt und die Steuereinheit steuert/regelt die Zufuhr elektrischer Energie). Die Steuereinheit ist hierbei konfiguriert die (im Prinzip variable) Energie-Menge der Energie-Zufuhr derart zu steuern (bzw. zu regeln, z.B. mittels Sensoren), dass ein zeitlich begrenzter Energiestoss an das Heizelement bereitgestellt wird (bzw. dadurch ein initialer Wärmestoss an die Umgebung zur schnellen Aufheizung eines Bodens (bzw. einer Wand oder einer Decke) abgegeben wird). Erfindungsgemäß weist die elektrische Flächenheizung ein zumindest teilweise selbstbegrenzendes Heizelement auf, wobei das elektrische Flächenheiz System, zur elektrischen Flächenheizung gehörend, ferner ein weiteres Heizelement aufweist, wobei das selbstbegrenzende Heizelement zwischen dem Heizelement und dem weiteren Heizelement angeordnet ist.

Gemäß einem weiteren Aspekt der vorliegenden Erfindung ist ein Verfahren zum Betreiben eines elektrischen Flächenheiz Systems beschrieben, wobei das elektrische Flächenheiz System eine elektrische Flächenheizung mit einem Heizelement hat, wobei zur Durchführung des Verfahrens das oben beschriebene elektrische Flächenheizsystem verwendet wird. Das Verfahren weist auf: i) Erfassen (zum Beispiel aktiv bestimmen, ermitteln, aus einem Speicher auslesen, mit einem Potentiometer einstellen, etc.) einer Energie-Menge, um einen zeitlich begrenzten Energiestoss an das Heizelement bereitzustellen, und ii) Steuern (z.B. mittels einer Steuereinheit) der Energie-Menge einer Energie-Zufuhr an die elektrische Flächenheizung derart, dass der zeitlich begrenzte Energiestoss an das Heizelement bereitgestellt wird.

Gemäß einem weiteren Aspekt der vorliegenden Erfindung ist ein Computerprogramm Produkt beschrieben, welches konfiguriert ist, wenn es an einem Computer (insbesondere einer Steuereinheit) betrieben wird, ein Verfahren zum Betreiben eines elektrischen Flächenheiz Systems, wie oben beschrieben, auszuführen.

Gemäß einem weiteren Aspekt der vorliegenden Erfindung ist ein Heizgesamtelement (insbesondere ein Heizgesamtkabel) für eine elektrische Flächenheizung und/oder ein elektrisches Flächenheiz System (insbesondere wie oben beschrieben) ausgeführt. Das Heizgesamtelement weist auf: i) ein Heizkabel und ii) ein selbstbegrenzendes Heizkabel, wobei das Heizkabel und das selbstbegrenzende Heizkabel thermisch miteinander gekoppelt sind (insbesondere mit einem elektrisch isolierenden Material dazwischen angeordnet sind, weiter insbesondere unabhängig voneinander ansteuerbar sind).

Gemäß einem weiteren Aspekt der vorliegenden Erfindung ist ein Verwenden eines Heizkabels und eines selbstbegrenzenden Heizkabels gemeinsam in einer elektrischen Flächenheizung ((im Wesentlichen) unabhängig voneinander) beschrieben, um einen zeitlich begrenzten Wärmestoss (an die Umgebung der elektrischen Flächenheizung) bereitzustellen.

Im Rahmen dieses Dokuments kann unter dem Begriff "elektrische Flächenheizung" (EFH) insbesondere eine Vorrichtung verstanden werden, welche Wärmeenergie abgibt, wenn ihr elektrische Energie zugeführt wird. Bevorzugt ist die EFH flächig ausgebildet, weist also zwei Haupterstreckungsrichtungen (Längenrichtung x und Breitenrichtung y) auf. Eine EFH kann ein Heizelement aufweisen, z.B. einen Heizdraht, ein Heizkabel, eine Heizfolie, oder eine Heizfläche. In einem einfachen Ausführungsbeispiel kann eine EFH durch einen flächig angeordneten Heizdraht realisiert werden, welcher von Strom durchflossen wird, so dass er sich erwärmt und entsprechend Wärme an die Umgebung abgibt. In einem weiteren Ausführungsbeispiel wird ein Heizkabel als Heizelement verwendet. Dieses kann an oder in einem Trägermaterial einer Trägerstruktur (beispielsweise einer Trägerfolie) angeordnet sein. In einem bevorzugten Beispiel kann ein Heizkabel, insbesondere in gebogener, weiter insbesondere mäandrierender Anordnung, in einem Trägermaterial angebracht oder in dem Trägermaterial eingebettet sein. Beispielsweise kann die Trägerstruktur als Folie ausgebildet sein, welche dann auf Rollen transportierbar ist. Zum Verlegen der EFH als Wand-, Decken- oder Bodenbelag können die Rollen dann ausgerollt und befestigt werden. In einem Ausführungsbeispiel kann die verlegte EFH mit einem Fussboden, z.B. Parkett, oder mit einer Tapete bedeckt werden. Insbesondere können elektrische Flächenheizungen im Baubereich, z.B. Hausbau und Gebäudebau, verwendet werden. In einem Beispiel umfasst der Begriff "Baubereich" keine Industrie oder Aviatik Anwendungen.

Im Rahmen dieses Dokuments kann unter dem Begriff "Trägerstruktur" eine flächige Struktur (z.B. in Form einer Folie) verstanden werden, welche geeignet ist als Träger für ein Heizelement (z.B. ein Heizkabel) zu fungieren. Die Trägerstruktur weist ein Trägermaterial auf, in welches ein Heizelement eingebettet werden kann und/oder auf/an welchem ein Heizelement angeordnet werden kann. Das Trägermaterial kann beispielsweise zumindest eines der folgenden Materialien aufweisen: i) geschnittene Styroporplatten (oder ähnliches Isoliermaterial), ii) isolierende Elastomerschäume (oder anorganische strukturierte Isolationsmaterialien als Untergrund) mit einer Einlege- oder Befestigungsmöglichkeit für das Heizelement, iii) Polymerklammern, welche entweder direkt am Boden montiert werden (analog Klammern von Warmwasserbodenheizungen), iv) flächige Kunststoff-Platten/-Folien, welche mittels eines Tiefziehprozesses derart strukturiert sind, dass sich Heizelemente einlegen lassen, v) Heatspreader (z.B. Aluminiumplatten, derart gebogen, dass Heizelemente eingelegt werden können). Ferner eignen sich z.B. folienartige und gitterartige Trägerstrukturen, auf denen ein Heizelement befestigt werden kann (und die allenfalls als Rollenware transportiert werden können).

Der Begriff "elektrisches Flächenheiz System" kann in diesem Zusammenhang ein System bezeichnen, welches neben der eigentlichen EFH weitere Komponenten aufweist, die mit der EFH assoziiert sein können. Dies sind beispielsweise Verlegehilfen, Heatspreader, mechanische Fixierungen, Steuerungssysteme, etc. Ferner können auch Komponenten der näheren Umgebung beinhaltet sein, z.B. bodenseitige Isolationen, elektrische Abschirmungen, Bodenbelag, Sensoren, Energiezuführung, etc.). Weiterhin kann das elektrische Flächenheiz System neben der EFH auch ein (nicht-transparentes) Abdeckmaterial aufweisen, welches die EFH (zumindest teilweise) bedeckt. Ferner kann ein elektrisches Flächenheizsystem ein Heizkomponente-assoziiertes Element aufweisen. Hierbei kann das Heizkomponente-assoziierte Element mit einer Heizkomponente der elektrischen Flächenheizung über ein Verbindungselement elektrisch leitfähig verbunden sein.

Der Begriff "Heizkomponente" kann sich im Rahmen dieses Dokuments insbesondere auf ein oder mehr Heizelemente und/oder ein oder mehr selbstbegrenzende Heizelemente beziehen. Eine Heizkomponente kann z.B. ein Heizkabel sein oder auch eine Gitterstruktur aus einer Mehrzahl von stabförmigen Heizelementen.

Der Begriff "Heizelement" kann sich im Rahmen dieses Dokuments insbesondere auf ein Element beziehen, welches besonders dafür geeignet ist, bei elektrischer Energie-Zufuhr Wärme an die Umgebung abzugeben. Ein Heizelement kann z.B. einen Heizdraht, ein Heizkabel, eine Heizfolie, oder eine Heizfläche umfassen. Auch kann ein Heizelement z.B. durch eine Kupferbahn realisiert werden. Der Begriff "Heizkabel" kann sich in diesem Dokument auf ein Kabel beziehen, welches besonders dafür geeignet ist, Wärme an die Umgebung abzugeben, wenn Energie in Form von Strom zugeführt wird, bzw. wenn das Kabel elektrisch kontaktiert ist. Im Rahmen dieses Dokuments kann der Begriff "Heizkabel" auch Heizdrähte und Heizbänder umfassen. Eine Heizkomponente kann insbesondere mit einem Heizkomponente-assoziierten Element elektrisch leitfähig, insbesondere über ein Verbindungselement, verbunden werden.

Im Rahmen dieses Dokuments kann der Begriff "Heizkomponente-assoziiertes Element" jegliches Element bezeichnen, welches über eine elektrisch leitfähige Verbindung (z.B. ein Verbindungselement) mit einer Heizkomponente einer elektrischen Flächenheizung verbunden werden kann. Hierbei kann das Heizkomponente-assoziierte Element z.B. ein Versorgungsleiter, ein Stromkabel, ein Sensor, ein elektrischer Verbinder zu einer Steckdose und/oder einem Stromkasten, ein Steuerungsanschluss sein. Weiterhin kann das Heizkomponente-assoziiertes Element aber auch eine weitere Heizkomponente oder eine weitere elektrische Flächenheizung sein. Auch kann eine Flächenheizung ein erstes Flächenheiz-Modul sein und das Heizkomponente-assoziiertes Element kann ein zweites Flächenheiz-Modul sein, wobei beide Module über das Verbindungselement elektrisch leitfähig miteinander verbunden sind. Das Heizkomponente-assoziierte Element kann einen Längenleiter mit einem Anschluss aufweisen, wobei dieser Anschluss an einen Anschluss der Heizkomponente elektrisch angeschlossen werden kann. Insbesondere kann diese Verbindung innerhalb des Verbindungsbereichs eines Verbindungselements durchgeführt werden.

Im Rahmen dieses Dokuments kann der Begriff "Verbindungselement" insbesondere jegliches Element bezeichnen, welches geeignet ist, eine Heizkomponente einer elektrischen Flächenheizung und ein Heizkomponente-assoziiertes Element (bzw. deren Anschlussleiter) in einem Verbindungsbereich elektrisch leitfähig miteinander zu verbinden. Das Verbindungselement kann mit einer elektrischen Heizkomponente (z.B. ein Heizkabel, eine Heizfolie, etc.) der elektrischen Flächenheizung koppelbar (und/oder gekoppelt) sein. Zusätzlich oder alternativ kann das Verbindungselement mit einem Heizkomponente-assoziierten Element (z.B. eine Versorgungsleitung, ein Steueranschluss, ein (insbesondere mit einem Verbindungskabel angeschlossener) Sensor, eine weitere Heizkomponente, etc.) koppelbar (und/oder gekoppelt) (die Kopplung kann insbesondere ein (festes) Integrieren des Verbindungselements an/in die elektrische Heizkomponente und/oder an/in das Heizkomponente-assoziierte Element sein) sein. Das Verbindungselement kann einen Verbindungsbereich aufweisen, in welchem die elektrische Heizkomponente mit dem Heizkomponente-assoziierten Element in einem Verbindungszustand elektrisch leitfähig verbindbar ist. Das Verbindungselement kann eine Kavität aufweisen, welche mit dem Verbindungsbereich assoziiert ist (bzw. in/an dem Verbindungsbereich angeordnet ist) und in welche ein wasserdichtes Material (z.B. flüssig oder gelförmig) einbringbar ist (und/oder eingebracht ist). Weiterhin kann das Verbindungselement eine Begrenzungsstruktur (z.B. eine Außenhülle oder eine Box mit Deckel) aufweisen, welche eingerichtet ist die Kavität derart zu begrenzen, dass der Verbindungsbereich im Verbindungszustand wasserdicht (insbesondere tauchdicht) ist (insbesondere wobei die Begrenzungsstruktur das wasserdichte Material (z.B. als Gel) innerhalb der Kavität an die aneinander verbundenen Anschlüsse der Heizkomponente und dem Heizkomponente-assoziierten Element drückt). In einem anderen Beispiel kann das Verbindungselement eine Positionierstruktur (z.B. eine Verbindestruktur) aufweisen, welche eingerichtet ist a) den Verbindungszustand bereitzustellen, wenn ein Position-Sicherheitskriterium erfüllt ist, und b) den Verbindungszustand nicht bereitzustellen, wenn das Position-Sicherheitskriterium nicht erfüllt ist.

Im Rahmen dieses Dokuments kann der Begriff "Kabel" einen elektrisch leitfähigen Längenleiter (bzw. Versorgungsleiter) bezeichnen. Der Begriff "Kabel" kann eine Litze oder einen Volleiter bezeichnen. Insbesondere kann der elektrisch leitfähige Längenleiter zumindest teilweise mit einem Isoliermaterial umgeben sein. Ein Kabel kann sich in einer Längsrichtung x erstrecken und, im Querschnitt gesehen, eine Breitenrichtung y und eine Höhenrichtung z aufweisen.

Bei einem Rundkabel können Breitenrichtung und Höhenrichtung im Wesentlichen gleich groß sein. Bei einem Flachband-Kabel kann die Breitenrichtung größer (insbesondere deutlich größer) als die Höhenrichtung sein.

Der Begriff "Steuereinheit" kann sich in diesem Dokument insbesondere auf eine Steuervorrichtung, z.B. einen Computer, eine SPS (Speicher-programmierbare Steuerung), ein Computersystem, einen Prozessor, beziehen, welcher/welches geeignet ist, die Energie-Zufuhr zu einer elektrischen Flächenheizung zu steuern (und zu regeln). Im Falle einer elektrischen Flächenheizung kann sich der Begriff "Energie-Zufuhr" insbesondere auf eine elektrische Energieversorgung beziehen. In einem einfachen Ausführungsbeispiel wird die Energie-Zufuhr durch ein Stromkabel realisiert, welches elektrischen Strom an die elektrische Flächenheizung, bzw. ein Heizelement der EFH bereitstellt. Die Steuereinheit kann hierbei derart implementiert werden, dass die Menge an elektrischer Energie, welche der EFH bereitgestellt wird, z.B. mittels eines Steuercomputers gesteuert bzw. geregelt wird. In einem weiteren Ausführungsbeispiel werden eine Mehrzahl von Energie-Zufuhr Leitungen von einem Computersystem gesteuert und mittels eines Sensornetzwerks während des Betriebs nachgeregelt. In einem Ausführungsbeispiel kann die Steuereinheit derart eingerichtet sein, dass die Energie-Menge eines Energiestosses variabel einstellbar ist. Insbesondere kann die Steuereinheit diese Energie-Menge selbst bestimmen oder auch vorgegeben bekommen (z.B. von einem Benutzer oder einem weiteren Steuersystem). Ferner kann die Steuereinheit eingerichtet sein, die Temperaturcharakteristik(en) (insbesondere Wärmeleitwerte und Wärmekapazität) der Umgebungsmaterialien zur Begrenzung der maximalen Oberflächentemperatur zu berücksichtigen (insbesondere entsprechend die Energie-Menge des Energiestosses zu regeln).

Der Begriff "Energiestoss" kann sich in diesem Dokument insbesondere auf eine Energie-Menge (im Kontext einer Energie-Zufuhr zu einer EFH) beziehen, welche deutlich über der gewöhnlichen Energie-Menge liegt, welche einer EFH im Betrieb zugeführt wird. In einem Ausführungsbeispiel kann die Energie-Menge eines Energiestosses zumindest das Doppelte, insbesondere das Vierfache, (oder mehr) der gewöhnlichen Energie-Menge betragen, welche einer EFH im Betrieb zugeführt wird. In einem spezifischen Beispiel kann die Energie-Menge des Energiestosses im Wesentlichen der maximalen (Heiz-) Leistung entsprechen). Die deutlich höhere Energie-Menge des Energiestosses kann in einer EFH zu einem entsprechenden Wärmestoss (bzw. einem Wärmestoss, welcher zu der Energie-Menge des Energiestosses korrespondiert) führen, bzw. einer initialen thermischen Überhitzung. Ein solcher Wärmestoss kann in einem Beispiel zu einer plötzlichen, extrem schnellen, Aufheizung der EFH und damit auch der umgebenden Räumlichkeit führen. Somit kann eine sofortige Aufheizung auf eine komfortable Temperatur (nicht unbedingt Erreichen einer absoluten Temperatur) erreicht werden. In einem anderen Ausführungsbeispiel ist ein solcher Energiestoss an einem Heizkabel durchführbar, aber nicht an einem selbstbegrenzenden Heizkabel, denn in letzterem würde der Temperaturabhängige Widerstand des selbstbegrenzenden Materials (siehe unten) einer schnellen Erwärmung entgegenwirken. In einem exemplarischen Ausführungsbeispiel liegt die Dauer des Energiestosses in dem Bereich 20 Sekunden bis 20 Minuten (insbesondere 10 Minuten, weiter insbesondere 5 Minuten, weiter insbesondere 2 Minuten).

Gemäß einem exemplarischen Ausführungsbeispiel kann die Erfindung auf der Idee basieren, dass ein elektrisches Flächenheiz System, welches zugleich ein schnelles (plötzliches) Aufheizen (bzw. einen initialen Wärmestoss) erlaubt, aber dennoch sicher und zuverlässig (insbesondere bezüglich Überhitzung und assoziierter Gefahren) ist, bereitgestellt werden kann, wenn eine Steuereinheit vorgesehen wird, welche eingerichtet ist die Energie-Menge der Energie-Zufuhr an das elektrische Flächenheiz System derart zu steuern, dass ein zeitlich begrenzter Energiestoss an das Heizelement der elektrischen Flächenheizung bereitgestellt wird. Da es dem Heizelement inhärent ist, bei Zufuhr von elektrischer Energie effizient Wärme an die Umgebung abzugeben, kann der Energiestoss zu einem zeitlich begrenzten Wärmestoss an die Umgebung, bzw. die umgebende Räumlichkeit führen. Konventionell wird die Heizleistung einer elektrischen Flächenheizung stets konservativ und statisch ausgelegt, was einer schnellen Aufheizung generell entgegensteht. Dies vor allem deswegen, weil aus Sicherheitsgründen die Oberflächentemperatur im Wohn- oder Arbeitsbereich einen gewissen Maximalwert nicht überschreiten darf. Zudem steht der gebräuchliche Einsatz von selbstbegrenzenden Heizkabeln einem plötzlichen Wärmestoss entgegen (bzw. diese Systeme können sich nur bis zu der Abregelungstemperatur erhitzen, danach ist der Wärmefluss begrenzt). Es hat sich nun aber überraschend herausgestellt, dass auch eine elektrische Flächenheizung einen initialen Wärmestoss zum plötzlichen Bereitstellen einer komfortablen Raumtemperatur unter sicheren Bedingungen ermöglichen kann, wenn eine Steuereinheit die Energie-Menge für einen zeitlich begrenzten Energiestoss an das Heizelement (insbesondere aber nicht an ein selbstbegrenzendes Heizelement) ermittelt, steuert und regelt. Der zeitlich begrenzte Energiestoss kann also gezielt ausgeführt (bzw. zugeführt) werden, so dass sich ein (unbegrenztes) Heizelement sehr schnell sehr stark erwärmt und einen entsprechenden Wärmestoss an die Umgebung abgibt, ohne, dass es zu einer Überhitzung und korrespondierenden Gefahren kommt.

Es kann somit ermöglicht werden, einen Raum in sehr kurzer Zeit in einen komfortablen Temperaturbereich aufzuheizen, was es wiederum erlaubt die Raumtemperatur bei Nichtbenutzung entweder tiefer abzusenken, oder auch Temperaturen von Räumen abzusenken, welche spontan benutzt werden sollen. So kann z.B. beim Verlassen eines Hauses eine gewisse Anzahl von Räumen Heizung-bezogen abgeschaltet werden, da diese z.B. in der Zeit zwischen den Ereignissen "Garagentoröffnung" und "Badezimmer betreten" wieder schnell auf eine komfortable Temperatur aufgeheizt werden können. Dadurch kann im Ergebnis der Energiebedarf insgesamt gesenkt werden.

Im Folgenden werden exemplarische Ausführungsbeispiele der Erfindung beschrieben.

Gemäß einem Ausführungsbeispiel weist das elektrische Flächenheiz System (insbesondere die elektrische Flächenheizung) ein Heizelement mit gekoppelter und/oder integrierter Temperatursteuerung, insbesondere ein (zumindest teilweise) selbstbegrenzendes Heizelement (insbesondere ein selbstbegrenzendes Heizkabel) auf. Dies kann den Vorteil haben, dass auf einfache und praktische Weise eine (zusätzliche) Sicherung gegen Überhitzung vorgesehen werden kann, wodurch das Flächenheizsystem noch sicherer und zuverlässiger wird.

Im Rahmen dieses Dokuments kann der Begriff "selbstbegrenzendes Heizelement" (oder selbstregulierendes Heizelement) eine besondere Ausführungsform eines Heizelements bezeichnen (insbesondere kann der Begriff "selbstbegrenzendes Heizelement" ein gewöhnliches Heizelement ausschließen). Der Begriff "selbstbegrenzendes Heizelement" kann insbesondere ein Heizelement mit gekoppelter und/oder integrierter Temperatursteuerung bezeichnen. Ein selbstbegrenzendes Heizelement kann derart konfiguriert sein, dass die Erwärmung ab einer bestimmten Temperatur reduziert wird oder ganz abschaltet. Die Selbstbegrenzung kann in einem Beispiel also absolut sein während die Selbstbegrenzung in einem anderen Beispiel nicht absolut ist (z.B. ist die Selbstbegrenzung derart, dass die Temperatur nur noch sehr wenig weiter ansteigt). In einem Ausführungsbeispiel wird ein selbstbegrenzendes Heizkabel verwendet (und im Folgenden beispielhaft beschrieben). Ein selbstregulierendes Heizkabel besteht bevorzugt aus zwei im Wesentlichen parallelen Längenleitern (Versorgungsleitern) bzw. Heizdrähten, welche in ein selbstbegrenzendes Material eingebettet sind. In einem Ausführungsbeispiel weist das selbstbegrenzende Material einen vernetzten und mit Kohlenstoffteilchen dotierten Kunststoff auf. Steigt die Temperatur im Betrieb, so dehnt sich der Kunststoff durch molekulare Expansion aus, und die Abstände zwischen den Kohlenstoffteilchen vergrößern sich. Der Widerstand im Kabel steigt, und die Wärmeproduktion des Kabels sinkt. Bei Abkühlung kehrt sich dieser Prozess um, und die Wärmeproduktion steigt wieder. In einem weiteren Beispiel wird ein selbstbegrenzendes Material mit einem hohen PTC (positive temperature coefficient) Widerstand (z.B. polykristalline Keramik) verwendet. Prinzipiell können Materialien mit einem (fast) sprunghaft ansteigenden Widerstand bei einer Grenztemperatur als selbstbegrenzendes Material geeignet sein.

Gemäß einem weiteren Ausführungsbeispiel der Erfindung ist das selbstbegrenzende Heizelement unabhängig von dem Heizelement (mittels der Steuereinheit) steuerbar (bzw. regelbar). Insbesondere ist die Steuereinheit konfiguriert den zeitlich begrenzten Energiestoss nicht an das selbstbegrenzende Heizelement bereitzustellen. Dies kann den Vorteil haben, dass ein gezielter plötzlicher Energiestoss (und darauf resultierender Wärmestoss) in einer elektrischen Flächenheizung ermöglicht ist und dennoch ein effizienter Schutz gegen Überhitzung vorgesehen ist. Ferner kann mittels des selbstbegrenzenden Heizelements die Wärmeverteilung optimiert werden (z.B. bei einer Umgebung mit wenig wärmeleitenden Komponenten).

In einem Beispiel kann ein EFH System zur Haltung eines maximalen Wärmeflusses ein (bevorzugt) unabhängiges selbstbegrenzendes Heizelement (bzw. selbstbegrenzendes Heizelement System) enthalten, welches innerhalb eines genügend kleinen örtlichen Umfeldes (z.B. in x und y Richtung) sicherstellt, dass der maximale Wärmeeintrag erfolgt (unabhängig von Objekten auf der Rauminnenseite). Wenn z.B. schlechte Wärmeleiter auf dem Boden liegen (z.B. eine Wolldecke), kann automatisch eine Abregelung in diesem Bereich erfolgen, so dass dieser nicht zu einer Oberflächenüberhitzung führt. Dies kann zum Beispiel durch das selbstbegrenzendes Heizkabel realisiert werden.

Gemäß einem weiteren Ausführungsbeispiel der Erfindung sind das Heizelement (insbesondere das Heizkabel) und das selbstbegrenzende Heizelement (insbesondere das selbstbegrenzende Heizkabel) innerhalb eines Heizgesamtelements (insbesondere einem Heizgesamtkabel) angeordnet. Hierbei können die beiden Heizelemente thermisch miteinander gekoppelt sein. Dies kann den Vorteil haben, dass ein kompaktes und robustes Bauelement (als Heizgesamtelement) bereitgestellt ist, welches flexibel in elektrischen Flächenheizungen bzw. EFH Systemen verbaut werden kann. Hierbei erlaubt das Bauelement einen zeitlich begrenzten Energieschub bei gleichzeitiger Sicherheit vor Überhitzung und/oder eine optimierte thermische Verteilung.

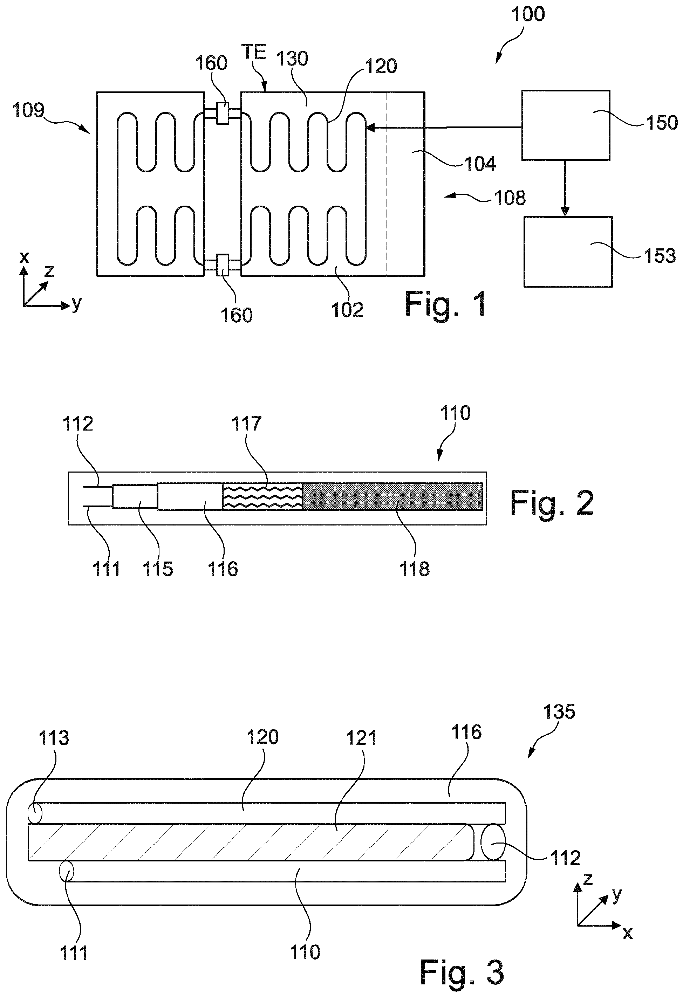

Gemäß einem Ausführungsbeispiel (siehe hierzu z.B. Figur 3 unten) wird mittels Druckverfahren ein selbstbegrenzendes Heizelement auf ein isolierendes Trägermaterial aufgebracht und mit Versorgungsleitern kontaktiert. Nach dem Aufbringen einer Isolationsschicht (isolierendes Material) wird ein (nichtbegrenzendes) Heizelement mit einem weiteren Versorgungsleiter aufgebracht. Zum Schluss wird das Ganze mit einer elektrischen (und allenfalls Feuchtigkeits-) Deckisolation hermetisch verschlossen. Die Versorgungsleiter können z.B. sowohl als Drähte als auch als Metallfolien oder gedruckte Leiter aufgebracht sein.

Gemäß einem weiteren Ausführungsbeispiel der Erfindung sind das Heizelement und das selbstbegrenzende Heizelement (zumindest abschnittsweise) (im Wesentlichen) parallel nebeneinander angeordnet. Bevorzugt ist ein (elektrisch) isolierendes Material dazwischen angeordnet. Dies kann den Vorteil haben, dass die Heizkabel besonders platzsparend und effizient eingesetzt werden können.

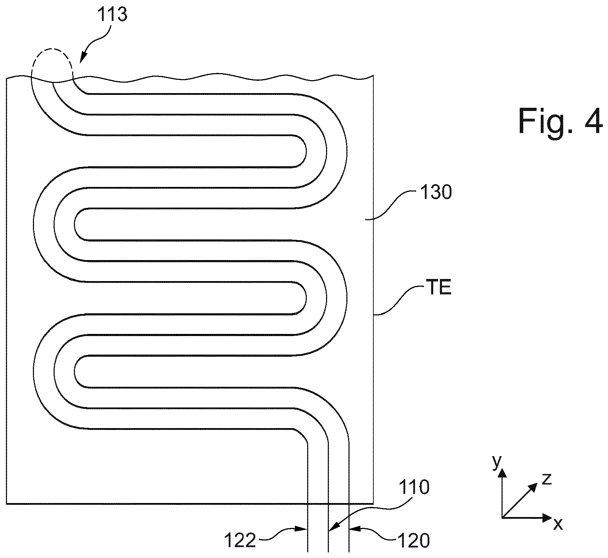

Gemäß einem weiteren Ausführungsbeispiel der Erfindung weist das elektrische Flächenheiz System ferner auf: ein weiteres Heizelement. Das selbstbegrenzende Heizelement ist hierbei zwischen dem Heizelement und dem weiteren Heizelement angeordnet. Insbesondere ist jedes von dem selbstbegrenzenden Heizelement, dem Heizelement, und dem weiteren Heizelement zumindest abschnittsweise gebogen (siehe hierzu z.B. Figur 4 unten). Dies kann den Vorteil haben, dass die Heizkabel besonders platzsparend und zugleich flächendeckend (z.B. innerhalb einer Trägerstruktur) verlegt werden können.

Gemäß einem weiteren Ausführungsbeispiel der Erfindung weist das selbstbegrenzende Heizelement auf: i) einen ersten Längenleiter, welcher eine erste Anschluss-Seite und eine erste End-Seite aufweist, ii) einen zweiten Längenleiter, welcher eine zweite Anschluss-Seite und eine zweite End-Seite aufweist, wobei der erste Längenleiter und der zweite Längenleiter in dem selbstbegrenzenden Heizkabel im Wesentlichen parallel nebeneinander angeordnet sind, und iii) ein selbstbegrenzendes Material, welches zwischen dem ersten Längenleiter und dem zweiten Längenleiter angeordnet ist, und welches Temperatur-gekoppelt ist. Das selbstbegrenzende Heizelement ist derart konfiguriert, dass a) die erste Anschluss-Seite und die zweite Anschluss-Seite an einen Versorgungsanschluss anschließbar sind, und b) die erste End-Seite und die zweite End-Seite aneinander (temporär) anschließbar sind (insbesondere über einen Relais-Kontakt) (und einen Kurzschluss bilden). Dies hat den Vorteil, dass ein selbstbegrenzendes Heizelement auf einfache und flexible Weise in ein gewöhnliches Heizelement umfunktioniert werden kann und zum Ausführen des Energiestosses verwendet werden kann.

Gemäß einem Ausführungsbeispiel wir ein selbstbegrenzendes Heizkabel an dem entgegengesetzten Ende der Einspeisung (Versorgungsanschluss) temporär kurzgeschlossen (also eines Ende (Anschluss-Seite) Einspeisung, anderes Ende (End-Seite) Kurzschluss, z.B. mit einem Relais-Kontakt). Dadurch kann die Selbstbegrenzungsfunktion außer Kraft gesetzt werden und es resultiert ein niederohmiger Heizkreis. In dieser Ausführungsvariante können beide Enden (Anschluss-Seite) des selbstbegrenzenden Heizelements zur Steuereinheit geführt sein (und der kurzschlussbildende Relais-Kontakt integriert sein). Durch eine geeignete Ansteuerung wird der so resultierende niederohmige Heizkreis mit dem Energiestoss aufgeheizt. Somit kann die Energie-Zufuhr eines selbstbegrenzenden Heizelements zur nicht begrenzenden Aufheizung verwendet werden.

Gemäß einem weiteren Ausführungsbeispiel der Erfindung weist die elektrische Flächenheizung ferner eine Trägerstruktur auf, welche entlang zweier Haupterstreckungsrichtungen (x, y) ausgebildet ist und eine Trägerebene aufspannt. Zumindest ein Abschnitt des Heizelements ist hierbei an und/oder in der Trägerstruktur angeordnet. Zusätzlich oder alternativ ist zumindest ein Abschnitt des selbstbegrenzenden Heizelements an und/oder in der Trägerstruktur angeordnet. Dies kann den Vorteil haben, dass erprobte und zuverlässige Aufbauten bzw. Materialien direkt angewendet werden können. In einem Beispiel können ein Heizelement und ein selbstbegrenzendes Heizelement gemeinsam in der Trägerstruktur einer elektrischen Flächenheizung verbaut werden.

Gemäß einem weiteren Ausführungsbeispiel der Erfindung ist die Steuereinheit konfiguriert, die Energie-Menge zum Bereitstellen des zeitlich begrenzten Energiestosses (selbst) zu bestimmen und/oder (von einer weiteren Einheit oder einem Benutzer) zu empfangen. Dies kann den Vorteil bringen, dass die Energie-Menge auf flexible Weise für verschiedene Situationen angepasst werden kann.

In einem Ausführungsbeispiel wird ein Einlernvorgang durchgeführt, bei welchem mittels sensorischer Werte die für die Schnellaufheizung benötigten Parameter ermittelt werden, bevorzugt kann die Steuereinheit diesen Einlernvorgang selbst durchführen.

Gemäß einem weiteren Ausführungsbeispiel der Erfindung ist die Steuereinheit konfiguriert die Energie-Menge zum Bereitstellen des zeitlich begrenzten Energiestosses zu bestimmen mittels zumindest einem aus der Gruppe, welche besteht aus: einer Temperaturcharakteristik des Heizelements, einer Temperaturcharakteristik des selbstbegrenzenden Heizelements, einer Temperaturcharakteristik einer weiteren Komponente des elektrischen Flächenheiz Systems. Insbesondere weist die Temperaturcharakteristik zumindest eines auf aus der Gruppe, welche besteht aus: Wärmefluss, Wärmekapazität. Dadurch können Komponenten des Systems direkt in die Steuerung bzw. Regelung des Energiestosses miteinbezogen werden, wodurch dieser effizienter und flexibler werden kann.

Der Begriff "Temperaturcharakteristik" kann in diesem Zusammenhang insbesondere eine Eigenschaft bezeichnen, welche mit einer Temperatur (insbesondere der Temperatur einer Komponente) des elektrischen Flächenheiz Systems assoziiert ist. Insbesondere kann sich die Eigenschaft auf den Wärmefluss oder die Wärmekapazität beziehen. Aus der Temperaturcharakteristik können Rückschlüsse gezogen werden, welche ein Bestimmen der Energie-Menge für einen zeitlich begrenzten Energiestoss bzw. ein Regeln dieser Energie-Menge ermöglichen.

In einem Beispiel wird die Temperaturcharakteristik von zumindest einem Heizelement als Sensorwert verwendet, um den initialen Energiestoss zu steuern und/oder zu regeln. In einem weiteren Ausführungsbeispiel wird ein selbstbegrenzendes Heizelement verwendet. Durch Überwachung des Stromverbrauchs kann festgestellt werden, wann die Begrenzung der Heizleistung einsetzt und wann ein kontinuierlicher Wärmefluss erreicht wird. Aus diesen Werten (neben anderen, wie z.B. der Umgebungstemperatur) kann sowohl auf die Wärmeleitfähigkeit, als auch auf die Wärmekapazität des umgebenden Systems geschlossen werden und die beschriebene Parametrisierung (z.B. in einem Lernprozess) erreicht werden. Die Werteermittlung kann zumindest teilweise darauf basieren, dass erst im eingeschwungenen Zustand des Systems ein kontinuierlicher Wärmefluss an die Oberfläche stattfindet. Der Energiefluss ändert sich dann nicht mehr (bzw. nur noch sehr langsam im Zusammenhang mit der Erwärmung der umgebenden Luft, bzw. des ganzen Raumes). Der erste Einsatzpunkt der Abregelung des selbstbegrenzenden Heizelements kann also einen Hinweis auf die Kombination von Wärmefluss und Wärmekapazität des direkten Umgebungssystems liefern.

In einem weiteren Ausführungsbeispiel wird eine wärmeabhängige Widerstandsveränderung (z.B. NTC oder PTC) während der Aufheizung zur weiteren Optimierung der Aufheizkurve verwendet. Dabei wird entweder der Strom bei gegebener Spannung ermittelt, oder die Energieversorgung wird kurz unterbrochen und der Widerstand des Heizelements gemessen. Insbesondere lässt sich so die initiale maximale Temperatur am Heizelement oder in direkter Nähe des Heizelements erkennen und steuern/limitieren. Dadurch können zum Beispiel direkt in der Nachbarschaft eingebaute Isolationsmaterialien (z.B. nach unten zum Boden hin bzw. zum Innern einer Wand oder Decke hin) vor Übertemperatur geschützt werden.

Gemäß einem weiteren Ausführungsbeispiel der Erfindung stellt der zeitlich begrenzte Energiestoss (durch den korrespondierenden Wärmestoss) zumindest abschnittsweise eine Temperatur von 30° C (insbesondere 45° C, weiter insbesondere 55° C, weiter insbesondere 65° C) oder mehr in (und/oder an) der elektrischen Flächenheizung (insbesondere dem Heizelement) bereit.

Gemäß einem weiteren Ausführungsbeispiel der Erfindung weist das Verfahren auf: Steuern der Energie-Menge der Energie-Zufuhr derart, dass der zeitlich begrenzte Energiestoss zumindest abschnittsweise eine Temperatur von 30° C (insbesondere 45° C, weiter insbesondere 55° C, weiter insbesondere 65° C) oder mehr in (und/oder an) der elektrischen Flächenheizung (insbesondere dem Heizelement) bereitstellt.

Dadurch kann ein besonders effizienter Wärmestoss an die Umgebung bereitgestellt werden und ein schnelles Erhitzen sichergestellt sein. So kann es möglich sein, einzelne Stellen (z.B. das Heizelement selbst oder direkt am Heizelement) in sehr kurzer Zeit auf über 30° C aufzuheizen und die Temperatur (Verteilungs-) Charakteristik der zum System gehörenden Nebenkomponenten (z.B. Heatspreader, Befestigungselemente, Trägermaterialien, Kleber, Zemente/Mörtel, Bodenbelag, Estrich, usw.) zur Wärmeverteilung zu nutzen.

Gemäß einem weiteren Ausführungsbeispiel der Erfindung stellt der zeitlich begrenzte Energiestoss zumindest abschnittsweise eine Oberflächentemperatur von 35° C (insbesondere 30° C) oder weniger an der elektrischen Flächenheizung (insbesondere an dem Heizelement) bereit.

Gemäß einem weiteren Ausführungsbeispiel der Erfindung weist das Verfahren auf: Steuern der Energie-Menge der Energie-Zufuhr derart, dass der zeitlich begrenzte Energiestoss zumindest abschnittsweise eine Oberflächentemperatur von 35° C (insbesondere 30° C) oder weniger an der elektrischen Flächenheizung (insbesondere dem Heizelement) bereitstellt.

Dadurch kann einerseits ein besonders effizienter Wärmestoss an die Umgebung bereitgestellt werden, welcher jedoch eine maximale Oberflächentemperatur nicht übersteigt und dadurch sicher und zuverlässig ist. Bei der vorteilhaften Kombination von Materialien mit sehr guter Wärmeleitung in x-y Richtung (z.B. Heatspreader mit einer dicken Aluminiumschicht) und Materialien mit geringer Wärmeleitung in z-Richtung (z.B. Kork, Holz, usw.) kann somit eine schnelle Oberflächenaufheizung erreicht werden, ohne lokale Übertemperaturen an der Oberfläche von über 30 oder 35° C zu erreichen.

Gemäß einem weiteren Ausführungsbeispiel der Erfindung weist das elektrische Flächenheiz System ferner auf: ein Wasser-basiertes Heizsystem, wobei die Steuereinheit mit dem Wasser-basierten Heizsystem gekoppelt ist und konfiguriert ist, die elektrische Flächenheizung und das Wasser-basierte Heizsystem zumindest zeitweise gleichzeitig (insbesondere unabhängig voneinander) zu betreiben. Dies kann den Vorteil bringen, dass eine besonders effiziente und flexibel steuerbare Schnellaufheizung ohne zusätzlichen Aufwand (wenn das Wasser-basierte Heizsystem bereits vorhanden ist) bereitgestellt werden kann.

In einem Ausführungsbeispiel wird eine elektrische Flächenheizung mit einem Wasser-basierten Heizsystem (z.B. eine normale wasserführende Fußbodenheizung) verwendet. Letzteres kann auf eine tiefe Grundtemperatur eingestellt sein. Bei Aktivierung auf die höhere Komforttemperatur wird mit dem elektrischen Schnellaufheizsystem eine kurzzeitige Ergänzung zum Wasser-basierten Heizsystem dazugeschaltet, und dieses allenfalls auf eine höhere Betriebstemperatur gebracht. Dabei kann das elektrische Schnellaufheizsystem, sowohl die initiale Schnellaufheizung (mittels Energiestoss) übernehmen, als auch eine Überbrückungszeit abdecken, bis das Wasser-basierte Heizsystem auf dem höheren Temperaturniveau eingependelt ist.

In einem weiteren Ausführungsbeispiel wird das Wasser-basierte Heizsystem von dem elektrischen Flächenheiz System (zumindest teilweise) räumlich getrennt, um möglichst wenig elektrische Energie an das Wasser-basierte Heizsystem abzugeben (zu verlieren). Dies kann z.B. mittels einer Trennfolie durchgeführt werden, insbesondere einer Trennfolie, welche Wärmestrahlung nur in Richtung Oberfläche passieren lässt.

Gemäß einem weiteren Ausführungsbeispiel der Erfindung weist die elektrische Flächenheizung ferner auf: i) einen Heizbereich, in welchem das Heizelement angeordnet ist, und ii) einen Freibereich, in welchem das Heizelement nicht angeordnet ist. Dies kann den Vorteil haben, dass Freihaltezonen vorhanden sind, welche eine spätere Bearbeitung, insbesondere Durchbohrung, zulassen.

In einem Ausführungsbeispiel ist ein Freibereich über (zusätzliche Registrierungspunkte) erfassbar, welche es ermöglichen, ohne Sichtkontakt zum Heizsystem die Position dieser Freihaltezonen zu bestimmen. Dieser Registrierungsmechanismus (z.B. über Bereichsmarker) kann es erlauben, auch bei vollständiger Bedeckung mit Baumaterialien nach dem Verlegen noch gefahrlos Durchdringungen herzustellen. Bei einer derart konstruierten elektrischen Flächenheizung kann es ermöglicht sein, nach dem Einbau in ein Bauwerk (vorgeplante) Freibereiche von sensiblen Heizbereichen mit stromführenden Heizkomponenten zu unterscheiden. Dies kann eine flexible und sichere spätere Montage von Objekten an Böden, Wänden, Decken (z.B. durch Anbohren) bei späteren Um- und Weiterbauten erlauben.

In einem Ausführungsbeispiel wird zumindest eines von dem selbstbegrenzenden und dem unbegrenzten Heizelement durch Heizfolien realisiert. Dabei stellt sich das Problem der späteren Durchbohrbarkeit dieser Baugruppe. Da insbesondere Heizsysteme bevorzugt grossflächig realisiert werden, kann sich diese Problematik verschärfen. Eine Lösung dieser Problematik kann durch regelmässige Aussparungen der Heizfolie und deren Verbindungselementen erreicht werden. Durch einzelne Registrierungspunkte, welche bezüglich ihrer Position durch einen fertigen Oberflächenaufbau hindurch detektiert werden können (z.B. magnetisch, kapazitiv, induktiv, usw.), kann es möglich sein die Orte der Freilassungen festzustellen und an den geeigneten Orten Löcher (für Wandkasten, Armaturen, Bodenprofile von Leichtbauwänden, usw.) zu bohren, ohne das EFH System zu beschädigen.

Der Begriff "Heizbereich" kann sich im Rahmen dieses Dokuments insbesondere auf einen Bereich innerhalb einer elektrischen Flächenheizung beziehen, welcher eine elektrische Heizkomponente aufweist und daher nicht dazu geeignet ist bearbeitet (insbesondere durchbohrt) zu werden. In einem Beispiel eines Heizbereichs ist in einer Trägerstruktur der elektrischen Flächenheizung ein Heizkabel eingebettet. In dem Heizbereich kann die Wahrscheinlichkeit deutlich erhöht sein, bei einem Bohren durch nicht-transparentes Abdeckmaterial und den darunterliegenden Heizbereich (z.B. durch die Trägerstruktur der elektrischen Flächenheizung), die Heizkomponente (z.B. das Heizkabel, die Heizfolie) und/oder deren Isolierung zu beschädigen (oder zu durchbohren). Diese Wahrscheinlichkeit kann in dem Heizbereich derart erhöht sein, dass ein Fachmann von dem Durchbohren abrät, weil die Gefahr einer Beschädigung zu gross ist. Der Begriff "Heizbereich" bezeichnet in einem Beispiel nicht nur die Heizkomponente selbst, sondern auch den umliegenden Bereich um die Heizkomponente herum, in welchem ein Bearbeiten bzw. ein Durchbohren generell nicht durchgeführt werden würde, weil eben die Sicherheit gefährdet ist. In einem Beispiel wird der Heizbereich einer elektrischen Flächenheizung definiert bzw. dokumentiert. Ferner kann der Heizbereich mit den Bereichspositionen von Bereichsmarkern assoziiert sein.

Der Begriff "Freibereich" kann sich im Rahmen dieses Dokuments insbesondere auf einen Bereich innerhalb einer elektrischen Flächenheizung beziehen, welcher keine elektrische Heizkomponente aufweist und daher dazu geeignet ist bearbeitet (insbesondere durchbohrt) zu werden. In einem Beispiel eines Freibereichs ist in einem Bereich der Trägerstruktur der elektrischen Flächenheizung kein Heizkabel eingebettet. In einem anderen Beispiel weist eine Heizfolie Freibereiche ohne Heizfunktion auf. In einem weiteren Beispiel werden Heizfolien-Abschnitte als Heizbereiche verwendet, zwischen welchen dann Freibereiche gelassen werden. Der Freibereich kann entsprechende Ausmasse aufweisen, so dass ein Bohren durch nicht-transparentes Abdeckmaterial und den darunterliegenden Freibereich gefahrlos ermöglicht ist. Die Größe des Freibereichs kann hierbei derart gewählt sein, dass die Wahrscheinlichkeit den Freibereich bei einem Bohren zu verfehlen, vernachlässigbar gering wird.

Gemäß einem weiteren Ausführungsbeispiel der Erfindung weist das elektrische Flächenheiz System ferner auf: i) ein erstes Flächenheizmodul, ii) ein zweites Flächenheizmodul, und iii) einen Verbinder (bzw. ein Verbindungselement), welcher das erste Flächenheizmodul und das zweite Flächenheizmodul miteinander verbindet, insbesondere wobei zumindest eines der Flächenheizmodule 10 dm², insbesondere 25 dm², weiter insbesondere 50 dm², oder grösser ist. Dies hat den Vorteil, dass eine elektrische Flächenheizung flexibel und mit vorteilhaften zusätzlichen Funktionalitäten aufgebaut werden kann.

In einem Ausführungsbeispiel besteht eine elektrische Flächenheizung bzw. ein elektrisches Flächenheiz System aus einzelnen Flächenheizmodulen, welche mittels Verbindungselementen untereinander verbunden werden können. Die entsprechende Sicherstellung der Position bei Verbindungserstellung lässt sich durch die beschriebenen Verbindungselemente erreichen, wobei die Verbinder in diesem Fall bereits Teil des nächsten Moduls sein können.

In einem Beispiel kann ein Flächenheizmodul zusätzliche Funktionalitäten integriert haben, wie z.B. eine Isolation (insbesondere schaumbasierend) zum Boden, zur Wand oder zur Decke hin. Durch diese zusätzliche Dicke entsteht eine gewisse Verbiegungssteifheit, welche, aufgrund der so entstehenden Paneele, die Montage erleichtert. In einem Beispiel kann ein Teil der erhöhten Positionierungssicherheit bei einem Modulsystem durch einen Mechanismus von Nut und Feder, insbesondere im Bereich der Isolation, hergestellt werden. Die Module können ausgelegt und miteinander verbunden werden. Die Module können weitere Baustoffe, wie Isolierung, Trittfestigkeitsschutz (während der Bauzeit) oder Trag-/Montagehilfsmittel aufweisen. In einem Beispiel können fertige Installationsmodule (insbesondere mit einer Isolation aus Styropor nach unten) mittels der Verbindungselemente verbunden werden.

Gemäß einem weiteren Ausführungsbeispiel weist die elektrische Flächenheizung ferner auf: zumindest zwei Temperatur-begrenzende Zonen, insbesondere wobei zumindest eine der Temperatur-begrenzenden Zonen 25 dm², insbesondere 10 dm², weiter insbesondere 2 dm², oder kleiner ist.

In einem Beispiel werden Zonen (zur selbständigen Abregelung) mit limitierter Fläche vorgesehen, welche in der Mehrzahl mittels eines Temperaturbegrenzung Mechanismus ausgestattet sind. Dabei wurden gute Ergebnisse erzielt, wenn solche Zonen kleiner 25 dm², bevorzugt kleiner 10 dm², besonders bevorzugt kleiner 2 dm², sind.

Diese Quadratdezimeter Maße können für die angedachten einzeln gesteuerten Temperatur-begrenzende Zonen z.B. als Ersatz für selbstbegrenzende Heizelemente verwendet werden. Das Energie-bezogene Reduzieren und/oder Abschalten kann z.B. mittels Thermostaten als Temperatur-begrenzende Zonen Elemente realisiert werden, welche bei einer Grenztemperatur die Stromzufuhr zur Beheizung eines (örtlich) naheliegenden Flächenteils (bzw. Temperatur-begrenzende Zone) reduzieren oder abschalten, dies insbesondere bei Zonen kleiner 25 dm². In einem Beispiel werden die Zonen durch eine Gitterstruktur aus Heizelementen definiert, wobei entlang der Heizelemente Temperatur-begrenzende Zonen Elemente angeordnet sein können.

Gemäß einem weiteren Ausführungsbeispiel der Erfindung weist das elektrische Flächenheiz System ferner zumindest eines aus der Gruppe auf, welche besteht aus: einem (Temperatur-) Sensor, einem Wärmefühler, einem Feuchtigkeitsfühler, einem Taupunktwächter (bzw. Taupunktfühlers). Dies kann den Vorteil bereitstellen, dass der zeitlich begrenzte Energiestoss effizient und zuverlässig bestimmt und gesteuert bzw. nachgeregelt werden kann.

In einem Ausführungsbeispiel werden im Rahmen der Inbetriebnahme einer Anlage mittels eines Messystems die Kenndaten der umgebenden Materialien ermittelt und so die Anlage optimal parametriert. Zumindest eine Variante dieser Parametrierung besteht aus der Temperaturmessung (punktuell (z.B. Thermometer) oder flächig (z.B. FLIR, Wärmebildkamera)) und dem daraus erfolgenden Ableiten der Wärmekapazitäts- und Wärmeleitungsparameter des Systems. Durch spezielle bereitgestellte und mit dem System adjustierte Sensoren kann ein solcher Prozess auch automatisierbar sein.

In einem Ausführungsbeispiel wird mittels eines Taupunktwächters das Vorliegen einer betreffend die Kondensation kritischen Situation ermittelt. Durch die hohe Aufheizgeschwindigkeit kann das Reagieren betreffend diese Situation verbessert werden. So kann zum Beispiel länger zugewartet werden, bis mit einer (Schnell-) Aufheizung begonnen wird, da die Aufheizverzögerung des Bodenaufbaus reduziert wird.

In einem weiteren Ausführungsbeispiel wird mittels eines Taupunktwächters festgestellt, dass die Boden-, Wand- oder Deckentemperatur kritisch für eine Kondensatbildung ist. Durch das Schnellaufheizsystem kann in kurzer Zeit ein großer Energieimpuls in die Fläche eingebracht und so einer Kondensatbildung entgegengewirkt werden. Durch die in sehr kurzer Zeit verfügbare große Wärmemenge kann eine sehr schnelle Aufheizung erreicht werden, was es konzeptionell wiederum erlaubt länger mit einem Aufheizen zuzuwarten, weil dies in sehr kurzer Zeit erfolgen kann. Es hat sich gezeigt, dass dies über eine größere Anzahl solcher Intervalle insgesamt Energie-sparender sein kann, weil ein Großteil von Ereignissen, bei welchen sicherheitshalber eingeschaltet wird, um keine Verspätung zu verursachen, so umgangen werden kann.

Gemäß einem weiteren Ausführungsbeispiel der Erfindung hat die elektrische Flächenheizung ferner ein selbstbegrenzendes Heizelement (insbesondere ein selbstbegrenzendes Heizkabel) und das Verfahren weist ferner auf: Steuern der Energie-Menge der Energie-Zufuhr derart, dass das selbstbegrenzende Heizelement im Wesentlichen konstant betrieben wird (insbesondere derart, dass das selbstbegrenzende Heizelement (im Wesentlichen) unabhängig von dem Heizelement gesteuert wird). Dies hat insbesondere den Vorteil, dass das selbstbegrenzende Heizelement als konstante zuverlässige Wärmequelle wirken kann, während das Heizelement über einen Wärmestoss eine Schnellaufheizung bereitstellt.

In einem Ausführungsbeispiel wird ein Heizkabel für die Schnellaufheizung und ein selbstbegrenzendes Kabel für den Dauerbetrieb vorgesehen. Besonders vorteilhaft kann es sein, wenn das Heizkabel und das selbstbegrenzende Heizkabel mit demselben Heatspreader (oder die beiden Heizkreise in direktem thermischem Kontakt sind (zum Beispiel in demselben Kabel (Heizgesamtkabel) untergebracht) verbunden sind. Dies kann eine indirekte Überwachung des direkten Heizkabels ermöglichen: Sobald dieses via den Heatspreader das selbstbegrenzende Kabel aufwärmt und dieses seinen Widerstand verändert, kann wiederum die Steuereinheit einen Rückschluss auf den Wärmefluss ziehen, und so den initialen Energiestoss in Dauer und Stärke optimieren.

In einem weiteren Ausführungsbeispiel ist der für die Schnellaufheizung vorgesehene Teil des EFH Systems elektrisch isoliert vom selbstbegrenzenden Teil des Systems. Die Schnellaufheizung ist nur während einem Bruchteil der Zeit in Betrieb, während der nicht aktiven Zeit wird das Schnellaufheizsystem elektrisch derart verschaltet, dass es als zusätzliche Suchschlaufe für den Fall einer unerwünschten Durchdringung dient und so zum Beispiel mit einem Fehlerstromschutzschalter (oder einem anderen Detektionsmechanismus) früher die Energiezuführung unterbrochen werden kann, als dies nur über das selbstbegrenzende System möglich wäre.

Gemäß einem weiteren Ausführungsbeispiel der Erfindung weist das Verfahren auf: i) (während des Steuerns) Ermitteln einer Temperaturcharakteristik, welche mit dem elektrischen Flächenheiz Systems assoziiert ist, und ii) (Nach-) Regeln der Energie-Menge der Energie-Zufuhr derart, dass der zeitlich begrenzte Energiestoss an das Heizelement bereitgestellt wird basierend auf der ermittelten Temperaturcharakteristik. Dies kann den Vorteil haben, dass ein dynamisches System vorliegt, welches flexibel auf Änderungen reagieren kann. Dadurch kann die Gesamtleistung verbessert werden. Das Nachregeln findet insbesondere mittels einem oder mehr Sensoren statt. Wie oben beschrieben können auch die Temperaturcharakteristika des EFH Systems verwendet werden.

Gemäß einem weiteren Ausführungsbeispiel ist das EFH System in zumindest einer Richtung mit einer schirmendenden, elektrisch leitenden Erdungsschicht überdeckt, welche auch die Funktion eines Heatspreaders übernehmen kann. Diese Erdungsschicht kann vollflächig sein oder aus einer Netzstruktur bestehen. Sie kann auch beidseitig aufgebracht sein. Die Erdungsschicht kann sowohl als EMV-Schutz fungieren als auch als Sicherheitssystem bei Verletzungen in Zusammenarbeit mit einem Fehlerstromschutzschalter dienen.

Im Folgenden werden exemplarische Ausführungsbeispiele der vorliegenden Erfindung mit Verweis auf die folgenden Figuren detailliert beschrieben.
Figur 1 zeigt eine Draufsicht auf ein elektrisches Flächenheiz System gemäß einem Ausführungsbeispiel der Erfindung.
Figur 2 zeigt ein selbstbegrenzendes Heizkabels gemäß einem Ausführungsbeispiel der Erfindung.
Figur 3 zeigt ein Heizgesamtkabel gemäß einem Ausführungsbeispiel der Erfindung.
Figur 4 zeigt eine Draufsicht auf eine elektrische Flächenheizung gemäß einem Ausführungsbeispiel der Erfindung.

Bevor die Figuren detailliert beschrieben werden, findet sich im Folgenden zunächst eine Diskussion einiger exemplarischer Ausführungsbeispiele der Erfindung.

Gemäß einem exemplarischen Ausführungsbeispiel der Erfindung kann gezielt eine Aufheizung auf eine komfortable Temperatur im Vordergrund stehen anstatt des Erreichens einer absoluten Temperatur. Wenn ein Raum mit warmem Boden betreten wird, so kann das Empfinden einer komfortablen Temperatur bereits bei einer tieferen Raumtemperatur gegeben sein. Es gilt also so schnell wie möglich die begehbaren Flächen einer solchen Umgebung auf komfortable Temperatur zu bringen (ähnliche Effekte können durch das Empfinden der ausgesandten Wärmestrahlung einer warmen Oberfläche einer Wand oder einer Decke gegeben sein). Während konventionelle Heizsysteme darauf ausgelegt sind, einen konstanten Temperaturfluss durch einen Boden oder durch eine Wand zu erreichen, wird vorgeschlagen, durch eine initiale thermische Überhitzung (Wärmestoss), welcher durch das Boden-, Wand- oder Deckensystem aufgenommen und verteilt wird, eine sehr schnelle Erwärmung der eigentlichen Kontaktoberfläche zur Rauminnenseite zu erreichen, ohne aber die sicherheitsmässige Maximaltemperatur zu überschreiten.

Gemäß einem exemplarischen Ausführungsbeispiel der Erfindung enthält eine elektrische Flächenheizung ein nicht selbstregelndes (bzw. nicht selbstbegrenzendes) Heizelement, welche durch eine Steuereinheit mit elektrischer Energie (Energie-Zufuhr) versorgt werden kann. Dadurch entsteht ein EFH System, das zumindest die nähere Umgebung des Heizelements mit umfasst. So wird es möglich unter Berücksichtigung des Wärmeflusses (also unter der Berücksichtigung der richtungsabhängigen Wärmeleitung), sowie der Wärmekapazität der umgebenden Baustoffe und der baustoffabhängigen Maximaltemperatur der direkt angrenzenden Komponenten, eine Modellierung vorzunehmen, welche eine gegenüber dem Stand der Technik deutlich höhere Erhitzung des Heizelements erlaubt, ohne eine Oberflächensicherheitstemperatur zu überschreiten. Dies führt zu einer massiv schnelleren Aufheizung der Oberfläche eines EFH Systems, was einen klaren Komfortfaktor darstellt (z.B. sehr schnell ein warmer Boden in einem Badezimmer).

Gemäß einem exemplarischen Ausführungsbeispiel der Erfindung kann durch eine parametrierbare Steuerung die initiale Energiespitze (Energiestoss) bestimmt werden, mit welcher das Umgebungssystem bei einem Schnellaufheizen geflutet wird. Diese Parameter berücksichtigen den Aufbau und die Eigenschaften des umgebenden Systems (Kleber, Beton, Isolation, Bodenbelag, usw.). Dadurch wird es möglich, den von Bauwerk zu Bauwerk variierenden Aufbau und die unterschiedlichen Materialien mit deren thermischen Eigenschaften zu berücksichtigen und eine Schnellaufheizung derart zu erreichen, dass mittels eines initialen Energiestosses (und daraus resultierenden Wärmestoss) eine Schnellaufheizung einer Fläche erreicht wird. Diese Fläche wirkt dann als thermischer Speicher, welcher diesen Energiestoss absorbiert und verteilt, bevor die Oberfläche des EFH Systems über einer tolerierbaren Temperatur liegt. Eine Realisierungsform einer solchen Steuerung besteht aus einem monostabilen Timer, der bei einer Heizungseinschaltung für eine parametrierbare Zeit diese Direktheizung auf voller Leistung einschaltet. Dies in Kombination mit einer Wiederanlaufsperre nach dem Ausschalten, so dass das EFH System vor dem nächsten Heizzyklus genügend ausgekühlt ist und dadurch die Überhitzungsgefahr entschärft ist.

Gleiche oder ähnliche Komponenten in unterschiedlichen Figuren sind mit gleichen Bezugsziffern versehen.

**Figur 1** zeigt eine Draufsicht auf ein elektrisches Flächenheiz System 101 zum Verlegen im Baubereich gemäß einem Ausführungsbeispiel der Erfindung. Das elektrische Flächenheiz System 101 weist eine elektrische Flächenheizung 100 auf, welche ein Heizkabel 120 und eine Trägerstruktur 130 hat. Die Trägerstruktur 130 ist entlang zweier Haupterstreckungsrichtungen x, y ausgebildet und spannt dabei eine Trägerebene TE auf. Das Heizkabel 120 ist in Trägermaterial der Trägerstruktur 130, welche als Trägerfolie ausgestaltet ist, gebogen (mäandrierend) angeordnet bzw. eingebettet. Die elektrische Flächenheizung 100 weist ferner auf: einen Heizbereich 102, in welchem das gebogene Heizkabel 120 angeordnet ist, und einen Freibereich 104, in welchem das Heizkabel 120 nicht angeordnet ist. Letzterer dient hierfür als Freihaltezone, um beispielsweise Bohrungen durchzuführen, wenn die elektrische Flächenheizung 100 von einem Boden oder einer Tapete überdeckt wird und nicht mehr sichtbar ist. Die elektrische Flächenheizung 100 weist ein erstes Flächenheizmodul 108 und ein zweites Flächenheizmodul 109, welche über Verbinder 160 miteinander verbunden sind.

Das elektrische Flächenheiz System 101 weist ferner eine Steuereinheit 150 auf, welche mit dem Heizkabel 120 der elektrischen Flächenheizung 100 gekoppelt ist. Die Steuereinheit 150 ist konfiguriert die elektrische Energie-Zufuhr der elektrischen Flächenheizung 100 zu steuern. Insbesondere ist die Steuereinheit konfiguriert die Energie-Menge der Energie-Zufuhr derart zu steuern, dass ein zeitlich begrenzter Energiestoss an das Heizkabel 120 bereitgestellt wird. Hierfür bestimmt die Steuereinheit 150 die notwendige Energie-Menge zum Bereitstellen des zeitlich begrenzten Energiestosses, wobei eine maximale Oberflächentemperatur berücksichtigt wird. Der zeitlich begrenzte Energiestoss (bzw. ein plötzliches Hochheizen, insbesondere auf Höchstleistung) verursacht einen initialen Wärmestoss an die Umgebung, um somit schnell einen Boden (bzw. eine Wand oder Decke) aufzuheizen und eine komfortable Raumtemperatur bereitzustellen. Weiterhin ist die Steuereinheit 150 konfiguriert Temperaturcharakteristiken (z.B. Wärmefluss, Wärmekapazität) des Heizkabels 120 und von weiteren Komponenten des elektrischen Flächenheiz Systems 101 zum Bestimmen des zeitlich begrenzten Energiestosses miteinzubeziehen.

Während des Steuerns ermittelt die Steuereinheit 150 die Temperaturcharakteristik(en), welche mit dem elektrischen Flächenheiz Systems 101 assoziiert sind und regelt die Energie-Menge der Energie-Zufuhr derart, dass der zeitlich begrenzte Energiestoss basierend auf der ermittelten Temperaturcharakteristik an das Heizkabel 120 bereitgestellt wird. Optional weist das Flächenheiz System 101 ein Wasser-basiertes Heizsystem 153 auf, welches an die Steuereinheit 150 gekoppelt ist. Die Steuereinheit 153 ist konfiguriert die elektrische Flächenheizung 100 und das Wasser-basierte Heizsystem zumindest zeitweise gleichzeitig (insbesondere unabhängig voneinander) zu betreiben.

**Figur 2** zeigt eine Detailansicht eines selbstbegrenzenden Heizelements in Form eines selbstbegrenzenden Heizkabels 110 gemäß einem Ausführungsbeispiel der Erfindung. Ein selbstbegrenzendes Material 115 bettet die Längenleiter 111, 112 ein und ist zwischen diesen angebracht. Um das selbstbegrenzende Material 115 herum ist eine elektrisch isolierende Schicht 116 angebracht. Diese kann z.B. ein elektrisch isolierendes Material mit hoher Wärmeleitfähigkeit aufweisen, z.B. ein keramisches Material wie Aluminiumhydroxid. Um die elektrisch isolierende Schicht 116 ist eine elektrisch leitfähige Schicht 117 angebracht, z.B. ein Kupferverzinntes Schutzgeflecht oder eine Aluminium Schutzfolie. Diese elektrisch leitfähige Schicht 117 weist vorzugsweise einen Schutzleiter auf. Die elektrisch leitfähige Schicht 117 ist schließlich von einem (insbesondere elektrisch isolierenden) Außenmantel 118 umschlossen.

**Figur 3** zeigt einen Querschnitt durch ein Heizgesamtelement in Form eines Heizgesamtkabels 135. Hierin sind das Heizkabel 120 und das selbstbegrenzende Heizkabel 110 derart angeordnet, dass sie thermisch miteinander gekoppelt sind. Das Heizkabel 120 und das selbstbegrenzende Heizkabel 110 sind (im Wesentlichen) parallel nebeneinander (bzw. übereinander) mit einer Schicht aus elektrisch isolierendem Material 121 dazwischen angeordnet. Beide Kabel 110, 120 sind ferner in einem weiteren elektrisch isolierenden Material 116 eingebettet, welches dem elektrisch isolierenden Material 121 entsprechen kann.

Das selbstbegrenzende Heizkabel 110 weist einen ersten Längenleiter 111 Anschluss auf und das Heizkabel 120 weist einen dritten Längenleiter 113 Anschluss auf. Beide, das selbstbegrenzende Heizkabel 110 und das Heizkabel 120, sind an einen zweiten Längenleiter 112 Anschluss verbunden.

**Figur 4** zeigt eine Draufsicht auf eine elektrische Flächenheizung 100 gemäß einem Ausführungsbeispiel der Erfindung. In der Trägerstruktur 130 eingebettet ist neben dem Heizkabel 120 und dem selbstbegrenzenden Heizkabel 110 ein weiteres Heizkabel 122. Hierbei ist das selbstbegrenzende Heizkabel 110 zwischen dem Heizkabel 120 und dem weiteren Heizkabel 122 angeordnet, wobei die drei Kabel 110, 120, 122 nebeneinander verlaufend angeordnet sind. Die drei Kabel 110, 120, 122 weisen jeweils gerade Abschnitte auf, in welchen sie parallel zueinander verlaufen und gebogene Abschnitte, in welchen sie nebeneinander aber nicht parallel zueinander angeordnet sind. Zu einer Seite der Flächenheizung 100 sind das Heizkabel 120 und das weitere Heizkabel 122 über einen dritten Längenleiter 113 Anschluss verbunden. Das selbstbegrenzende Heizkabel 110 verfügt bereits über zwei Längenleiter (siehe oben) und sollte am Ende lediglich isoliert werden.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichen

- 100: Elektrische Flächenheizung
- 101: Elektrisches Flächenheiz System
- 102: Heizbereich
- 104: Freibereich
- 108: Erstes Flächenheizmodul
- 109: Zweites Flächenheizmodul
- 110: Selbstbegrenzendes Heizelement
- 111: Erster Längenleiter
- 112: Zweiter Längenleiter
- 113: Dritter Längenleiter
- 115: Selbstbegrenzendes Material
- 116: Elektrisch isolierende Schicht
- 117: Elektrisch leitfähige Schicht
- 118: Außenmantel
- 120: Heizelement
- 121: Elektrisch isolierendes Material
- 122: Weiteres Heizelement
- 130: Trägerstruktur
- 135: Heizgesamtelement
- 150: Steuereinheit
- 153: Wasser-basiertes Heizsystem
- 160: Verbinder, Verbindungselement

- TE: Trägerebene
- x: Längenrichtung
- y: Breitenrichtung
- z: Höhenrichtung

## Patentansprüche

1. Ein elektrisches Flächenheiz System (101) zum Einsatz im Baubereich, welches aufweist:
eine elektrische Flächenheizung (100), welche ein Heizelement (120), insbesondere ein Heizkabel, aufweist; und
eine Steuereinheit (150), welche mit der elektrischen Flächenheizung (100) gekoppelt ist, und welche konfiguriert ist eine Energie-Zufuhr zu der elektrischen Flächenheizung (100) zu steuern;
wobei die Steuereinheit (150) konfiguriert ist die Energie-Menge der Energie-Zufuhr derart zu steuern, dass ein zeitlich begrenzter Energiestoss an das Heizelement (120) bereitgestellt wird,
wobei die elektrische Flächenheizung (100) ein zumindest teilweise selbstbegrenzendes Heizelement (110) aufweist **gekennzeichnet dadurch,**
**dass** das elektrische Flächenheiz System (101), zur elektrischen Flächenheizung (100) gehörend, ferner ein weiteres Heizelement (122) aufweist,
wobei das selbstbegrenzende Heizelement (110) zwischen dem Heizelement (120) und dem weiteren Heizelement (122) angeordnet ist.

2. Das elektrische Flächenheiz System (101) gemäß Anspruch 1,
wobei das selbstbegrenzende Heizelement (110) unabhängig von dem Heizelement (120) steuerbar ist, insbesondere wobei die Steuereinheit (150) konfiguriert ist den zeitlich begrenzten Energiestoss nicht an das selbstbegrenzende Heizelement (110) bereitzustellen.

3. Das elektrische Flächenheiz System (101) gemäß Anspruch 1 oder 2,
wobei das Heizelement (120), insbesondere das Heizkabel, und das selbstbegrenzende Heizelement (110), insbesondere das selbstbegrenzende Heizkabel, innerhalb einem Heizgesamtelement (135), insbesondere einem Heizgesamtkabel, angeordnet sind, insbesondere thermisch miteinander gekoppelt sind.

4. Das elektrische Flächenheiz System (101) gemäß einem beliebigen der Ansprüche 1 bis 3,
wobei das Heizelement (120) und das selbstbegrenzende Heizelement (110) zumindest abschnittsweise im Wesentlichen parallel nebeneinander, insbesondere mit einem elektrisch isolierenden Material (121) dazwischen, angeordnet sind.

5. Das elektrische Flächenheiz System (101) gemäß einem beliebigen der Ansprüche 1 bis 4,
wobei jedes von dem selbstbegrenzenden Heizelement (110), dem Heizelement (120), und dem weiteren Heizelement (122) zumindest abschnittsweise gebogen ist und/oder
wobei das selbstbegrenzende Heizelement (110) aufweist:
einen ersten Längenleiter (111), welcher eine erste Anschluss-Seite und eine erste End-Seite aufweist;
einen zweiten Längenleiter (112), welcher eine zweite Anschluss-Seite und eine zweite End-Seite aufweist;
wobei der erste Längenleiter (111) und der zweite Längenleiter (112) in dem selbstbegrenzenden Heizkabel (110) im Wesentlichen parallel nebeneinander angeordnet sind; und
ein selbstbegrenzendes Material (115), welches zwischen dem ersten Längenleiter (111) und dem zweiten Längenleiter (112) angeordnet ist, und welches Temperatur-gekoppelt ist;
wobei das selbstbegrenzende Heizelement (110) derart konfiguriert ist, dass
die erste Anschluss-Seite und die zweite Anschluss-Seite an einen Versorgungsanschluss anschließbar sind, und
die erste End-Seite und die zweite End-Seite aneinander anschließbar sind, insbesondere über einen Relais-Kontakt.

6. Das elektrische Flächenheiz System (101) gemäß einem beliebigen der Ansprüche 1 bis 5, wobei die elektrische Flächenheizung (100) ferner aufweist:
eine Trägerstruktur (130), welche entlang zweier Haupterstreckungsrichtungen (x, y) ausgebildet ist und eine Trägerebene (TE) aufspannt;
wobei zumindest ein Abschnitt des Heizelements (120) an und/oder in der Trägerstruktur (130) angeordnet ist; und/oder
wobei zumindest ein Abschnitt des selbstbegrenzenden Heizelements (110) an und/oder in der Trägerstruktur (130) angeordnet ist; und/oder
wobei die Steuereinheit (150) konfiguriert ist die notwendige Energie-Menge zum Bereitstellen des zeitlich begrenzten Energiestosses zu bestimmen und/oder zu empfangen; und
wobei die Steuereinheit (150) konfiguriert ist die Energie-Menge zum Bereitstellen des zeitlich begrenzten Energiestosses zu bestimmen mittels zumindest einem aus der Gruppe, welche besteht aus: einer Temperaturcharakteristik des Heizelements (120), einer Temperaturcharakteristik des selbstbegrenzenden Heizelements (110), einer Temperaturcharakteristik einer weiteren Komponente des elektrischen Flächenheiz Systems (101),
insbesondere wobei die Temperaturcharakteristik zumindest eines aufweist aus der Gruppe, welche besteht aus: Wärmefluss, Wärmekapazität.

7. Das elektrische Flächenheiz System (101) gemäß einem beliebigen der Ansprüche 1 bis 6,
wobei das elektrische Flächenheiz System (101) ferner aufweist:
ein Wasser-basiertes Heizsystem (153);
wobei die Steuereinheit (150) mit dem Wasser-basierten Heizsystem gekoppelt ist und konfiguriert ist, die elektrische Flächenheizung (100) und das Wasser-basierte Heizsystem zumindest zeitweise gleichzeitig zu betreiben; und/oder
wobei die elektrische Flächenheizung (100) ferner aufweist:
einen Heizbereich (102), in welchem das Heizelement (120) angeordnet ist; und
einen Freibereich (104), in welchem das Heizelement (120) nicht angeordnet ist; und/oder
wobei das elektrische Flächenheiz System (101) ferner aufweist:
ein erstes Flächenheizmodul (108);
ein zweites Flächenheizmodul (109); und
einen Verbinder (160), welcher das erste Flächenheizmodul (108) und das zweite Flächenheizmodul (109) miteinander verbindet,
insbesondere wobei zumindest eines der Flächenheizmodule (108, 109) 25 dm², insbesondere 10 dm², weiter insbesondere 2 dm², oder kleiner ist; und/oder
wobei das elektrische Flächenheiz System (101) ferner zumindest eines aufweist aus der Gruppe, welche besteht aus: einem Temperatursensor, einem Wärmefühler, einem Feuchtigkeitsfühler, einem Taupunktwächter.

8. Das elektrische Flächenheiz System (101) gemäß einem beliebigen der vorhergehenden Ansprüche,
wobei der zeitlich begrenzte Energiestoss zumindest abschnittsweise eine Temperatur von 30° C, insbesondere 45° C, weiter insbesondere 55° C, weiter insbesondere 65° C, oder mehr in und/oder an der elektrischen Flächenheizung (100), insbesondere dem Heizelement (120), bereitstellt.

9. Das elektrische Flächenheiz System (101) gemäß einem beliebigen der vorhergehenden Ansprüche,
wobei der zeitlich begrenzte Energiestoss zumindest abschnittsweise eine Oberflächentemperatur von 35° C, insbesondere 30° C, oder weniger an der elektrischen Flächenheizung (100), insbesondere an dem Heizelement (120), bereitstellt.

10. Ein Verfahren zum Betreiben eines elektrischen Flächenheizsystems (101), welches eine elektrische Flächenheizung (100) mit einem Heizelement (120) hat, wobei zur Durchführung des Verfahrens ein elektrisches Flächenheizsystem (101) nach einem der vorhergehenden Ansprüche 1 bis 9 verwendet wird, das Verfahren aufweisend:
Erfassen einer Energie-Menge, um einen zeitlich begrenzten Energiestoss an das Heizelement (120) bereitzustellen; und
Steuern der Energie-Menge einer Energie-Zufuhr an die elektrische Flächenheizung (100) derart, dass der zeitlich begrenzte Energiestoss an das Heizelement (120) bereitgestellt wird.

11. Das Verfahren gemäß Anspruch 10, aufweisend:
Steuern der Energie-Menge der Energie-Zufuhr derart, dass der zeitlich begrenzte Energiestoss zumindest abschnittsweise eine Temperatur von 30° C, insbesondere 45° C, weiter insbesondere 55° C, weiter insbesondere 65° C, oder mehr in und/oder an der elektrischen Flächenheizung (100), insbesondere dem Heizelement (120), bereitstellt.

12. Das Verfahren gemäß Anspruch 10 oder 11, aufweisend:
Steuern der Energie-Menge der Energie-Zufuhr derart, dass der zeitlich begrenzte Energiestoss zumindest abschnittsweise eine Oberflächentemperatur von 35° C, insbesondere 30° C, oder weniger an der elektrischen Flächenheizung (100), insbesondere dem Heizelement (120), bereitstellt.

13. Das Verfahren gemäß einem beliebigen der Ansprüche 10 bis 12, wobei das Verfahren ferner aufweist:
Steuern der Energie-Menge der Energie-Zufuhr derart, dass das selbstbegrenzende Heizelement (110) im Wesentlichen konstant im Dauerbetrieb betrieben wird, wobei das selbstbegrenzende Heizelement (110) unabhängig von dem Heizelement (120) gesteuert wird.

14. Das Verfahren gemäß einem beliebigen der Ansprüche 10 bis 13, ferner aufweisend:
während des Steuerns, Ermitteln einer Temperaturcharakteristik, welche mit dem elektrischen Flächenheiz Systems (101) assoziiert ist; und
Regeln der Energie-Menge der Energie-Zufuhr derart, dass der zeitlich begrenzte Energiestoss basierend auf der ermittelten Temperaturcharakteristik an das Heizelement (120) bereitgestellt wird.

15. Ein Computerprogramm Produkt, welches konfiguriert ist, wenn es an einem Computer, insbesondere einer Steuereinheit (150), betrieben wird, ein Verfahren zum Betreiben eines elektrischen Flächenheiz Systems (101) gemäß einem beliebigen der Ansprüche 10 bis 14 auszuführen.

## Claims

1. An electric panel heating system (101) for use in the construction sector, comprising:
an electric panel heater (100) comprising a heating element (120), in particular a heating cable; and
a control unit (150) coupled to the electric panel heater (100) and configured to control an energy supply to the electric panel heater (100); wherein the control unit (150) is configured to control the energy amount of the energy supply such that a time-limited energy surge is provided to the heating element (120),
wherein the electric panel heater (100) comprises an at least partially self-limiting heating element (110), **characterized in that**
the electric panel heating system (101), belonging to the electric panel heater (100), further comprises a further heating element (122),
wherein the self-limiting heating element (110) is arranged between the heating element (120) and the further heating element (122).

2. The electric panel heating system (101) according to claim 1,
wherein the self-limiting heating element (110) is controllable independently of the heating element (120), in particular wherein the control unit (150) is configured not to provide the time-limited energy surge to the self-limiting heating element (110).

3. The electric panel heating system (101) according to claim 1 or 2,
wherein the heating element (120), in particular the heating cable, and the self-limiting heating element (110), in particular the self-limiting heating cable, are arranged within an overall heating element (135), in particular an overall heating cable, in particular are thermally coupled to each other.

4. The electric panel heating system (101) according to any one of claims 1 to 3,
wherein the heating element (120) and the self-limiting heating element (110) are arranged at least in sections substantially parallel to each other, in particular with an electrically insulating material (121) in between.

5. The electric panel heating system (101) according to any one of claims 1 to 4,
wherein each of the self-limiting heating element (110), the heating element (120), and the further heating element (122) is bent at least in sections and/or wherein
the self-limiting heating element (110) comprises:
a first longitudinal conductor (111), which has a first connection side and a first end side;
a second longitudinal conductor (112), which has a second connection side and a second end side;
wherein the first longitudinal conductor (111) and the second longitudinal conductor (112) are arranged in the self-limiting heating cable (110) substantially parallel to each other; and
a self-limiting material (115), which is arranged between the first longitudinal conductor (111) and the second longitudinal conductor (112), and which is temperature-coupled;
wherein the self-limiting heating element (110) is configured such that the first connection side and the second connection side are connectable to a supply connection, and
the first end side and the second end side are connectable to each other, in particular via a relay contact.

6. The electric panel heating system (101) according to any one of claims 1 to 5, wherein the electric panel heater (100) further comprises:
a support structure (130), which is formed along two main extension directions (x, y) and spans a support plane (TE);
wherein at least one section of the heating element (120) is arranged on and/or in the support structure (130); and/or
wherein at least one portion of the self-limiting heating element (110) is arranged on and/or in the support structure (130); and/or
wherein the control unit (150) is configured to determine and/or receive the necessary energy amount for providing the time-limited energy surge; and
wherein the control unit (150) is configured to determine the energy amount for providing the time-limited energy surge by means of at least one from the group consisting of: a temperature characteristic of the heating element (120), a temperature characteristic of the self-limiting heating element (110), a temperature characteristic of a further component of the electric surface heating system (101),
in particular wherein the temperature characteristic comprises at least one from the group consisting of: heat flow, heat capacity.

7. The electric panel heating system (101) according to any one of claims 1 to 6,
wherein the electric panel heating system (101) further comprises:
a water-based heating system (153);
wherein the control unit (150) is coupled to the water-based heating system and configured to operate the electric panel heater (100) and the water-based heating system at least temporarily simultaneously; and/or
wherein the electric panel heater (100) further comprises:
a heating area (102) in which the heating element (120) is arranged; and
a free area (104) in which the heating element (120) is not arranged; and/or
wherein the electric panel heating system (101) further comprises:
a first panel heating module (108);
a second panel heating module (109); and
a connector (160) which connects the first panel heating module (108) and the second panel heating module (109) to each other,
in particular wherein at least one of the panel heating modules (108, 109) is 25 dm², in particular 10 dm², further in particular 2 dm², or less; and/or
wherein the electric panel heating system (101) further comprises at least one from the group consisting of: a temperature sensor, a heat sensor, a humidity sensor, a dew point monitor.

8. The electric panel heating system (101) according to any one of the preceding claims,
wherein the time-limited energy surge provides at least in sections a temperature of 30°C, in particular 45°C, further in particular 55°C, further in particular 65°C, or more in and/or at the electric panel heater (100), in particular the heating element (120).

9. The electric panel heating system (101) according to any one of the preceding claims,
wherein the time-limited energy surge provides at least in sections a surface temperature of 35°C, in particular 30°C, or less at the electric panel heater (100), in particular at the heating element (120).

10. A method for operating an electric panel heating system (101) having an electric panel heater (100) with a heating element (120), wherein an electric panel heating system (101) according to any one of the preceding claims 1 to 9 is used for carrying out the method, the method comprising:
detecting an energy amount in order to provide a time-limited energy surge to the heating element (120); and
controlling the energy amount of an energy supply to the electric panel heater (100) such that the time-limited energy surge is provided to the heating element (120).

11. The method according to claim 10, comprising:
controlling the energy amount of the energy supply such that the time-limited energy surge provides at least in sections a temperature of 30°C, in particular 45°C, further in particular 55°C, further in particular 65°C, or more in and/or at the electric panel heater (100), in particular the heating element (120).

12. The method according to claim 10 or 11, comprising:
controlling the energy amount of the energy supply such that the time-limited energy surge provides at least in sections a surface temperature of 35°C, in particular 30°C, or less at the electric panel heater (100), in particular the heating element (120).

13. The method according to any one of claims 10 to 12, wherein the method further comprises:
controlling the energy amount of the energy supply such that the self-limiting heating element (110) is operated substantially constant in continuous operation, wherein the self-limiting heating element (110) is controlled independently of the heating element (120).

14. The method according to any one of claims 10 to 13, further comprising:
during the controlling, determining a temperature characteristic associated with the electric panel heating system (101); and
controlling the energy amount of the energy supply such that the time-limited energy surge is provided to the heating element (120) based on the determined temperature characteristic.

15. A computer program product configured, when operated on a computer, in particular a control unit (150), to carry out a method for operating an electric panel heating system (101) according to any one of claims 10 to 14.

## Revendications

1. Système électrique de chauffage de surface (101) pour une utilisation dans le secteur de la construction, qui comprend :
un chauffage électrique de surface (100), qui présente un élément chauffant (120), en particulier un câble chauffant ; et
une unité de commande (150), qui est couplée au chauffage électrique de surface (100) et qui est configurée pour commander une alimentation en énergie vers le chauffage électrique de surface (100) ;
dans lequel l'unité de commande (150) est configurée pour commander la quantité d'énergie de l'alimentation en énergie de manière à fournir une impulsion d'énergie limitée dans le temps à l'élément chauffant (120),
dans lequel le chauffage électrique de surface (100) présente un élément chauffant (110) s'autolimitant au moins partiellement, **caractérisé en ce que**
le système électrique de chauffage de surface (101) appartenant au chauffage électrique de surface (100) présente en outre un élément chauffant (122) supplémentaire,
dans lequel l'élément chauffant autolimitant (110) est agencé entre l'élément chauffant (120) et l'élément chauffant (122) supplémentaire.

2. Système électrique de chauffage de surface (101) selon la revendication 1,
dans lequel l'élément chauffant autolimitant (110) peut être commandé indépendamment de l'élément chauffant (120), en particulier dans lequel l'unité de commande (150) est configurée pour ne pas fournir l'impulsion d'énergie limitée dans le temps à l'élément chauffant autolimitant (110).

3. Système électrique de chauffage de surface (101) selon la revendication 1 ou 2,
dans lequel l'élément chauffant (120), en particulier le câble chauffant, et l'élément chauffant autolimitant (110), en particulier le câble chauffant autolimitant, sont agencés à l'intérieur d'un élément chauffant complet (135), en particulier d'un câble chauffant complet, en particulier sont couplés thermiquement l'un à l'autre.

4. Système électrique de chauffage de surface (101) selon l'une quelconque des revendications 1 à 3,
dans lequel l'élément chauffant (120) et l'élément chauffant autolimitant (110) sont agencés au moins partiellement de manière essentiellement parallèle l'un à l'autre, en particulier avec intercalation d'un matériau électriquement isolant (121).

5. Système électrique de chauffage de surface (101) selon l'une quelconque des revendications 1 à 4,
dans lequel chaque élément parmi l'élément chauffant autolimitant (110), l'élément chauffant (120) et l'élément chauffant (122) supplémentaire est courbé au moins partiellement et/ou
dans lequel l'élément chauffant autolimitant (110) présente :
un premier conducteur long (111), qui présente un premier côté de raccordement et un premier côté d'extrémité ;
un deuxième conducteur long (112), qui présente un deuxième côté de raccordement et un deuxième côté d'extrémité ;
dans lequel le premier conducteur long (111) et le deuxième conducteur long (112) sont agencés l'un à côté de l'autre dans le câble chauffant autolimitant (110) de manière essentiellement parallèle ; et
un matériau autolimitant (115), qui est agencé entre le premier conducteur long (111) et le deuxième conducteur long (112) et qui est couplé en température ;
dans lequel l'élément chauffant autolimitant (110) est configuré de telle manière que
le premier côté de raccordement et le deuxième côté de raccordement peuvent être raccordés à un raccord d'alimentation, et
le premier côté d'extrémité et le deuxième côté d'extrémité peuvent être raccordés l'un à l'autre, en particulier par l'intermédiaire d'un contact de relais.

6. Système électrique de chauffage de surface (101) selon l'une quelconque des revendications 1 à 5, dans lequel le chauffage électrique de surface (100) comprend en outre :
une structure de support (130) qui est formée le long de deux directions d'extension principales (x, y) et qui couvre un plan de support (TE) ;
dans lequel au moins une section de l'élément chauffant (120) est agencée sur et/ou dans la structure de support (130) ; et/ou
dans lequel au moins une section de l'élément chauffant autolimitant (110) est agencée sur et/ou dans la structure de support (130) ; et/ou
dans lequel l'unité de commande (150) est configurée pour déterminer et/ou recevoir la quantité d'énergie nécessaire pour fournir l'impulsion d'énergie limitée dans le temps ; et
dans lequel l'unité de commande (150) est configurée pour déterminer la quantité d'énergie permettant de fournir l'impulsion d'énergie limitée dans le temps au moyen d'au moins une caractéristique parmi le groupe composé de : une caractéristique de température de l'élément chauffant (120), une caractéristique de température de l'élément chauffant autolimitant (110), une caractéristique de température d'un composant supplémentaire du système électrique de chauffage de surface (101),
en particulier dans lequel la caractéristique de température comprend au moins un parmi le groupe constitué de : flux de chaleur, capacité thermique.

7. Système électrique de chauffage de surface (101) selon l'une quelconque des revendications 1 à 6,
dans lequel le système électrique de chauffage de surface (101) comprend en outre :
un système de chauffage à base d'eau (153) ;
dans lequel l'unité de commande (150) est couplée au système de chauffage à base d'eau et est configurée pour faire fonctionner le chauffage électrique de surface (100) et le système de chauffage à base d'eau de manière simultanée au moins temporairement ; et/ou
dans lequel le chauffage électrique de surface (100) comprend en outre :
une zone de chauffage (102) dans laquelle l'élément chauffant (120) est agencé ; et
une zone libre (104) dans laquelle l'élément chauffant (120) n'est pas agencé ; et/ou
dans lequel le système électrique de chauffage de surface (101) comprend en outre :
un premier module de chauffage de surface (108) ;
un deuxième module de chauffage de surface (109) ; et
un connecteur (160) reliant le premier module de chauffage de surface (108) et le deuxième module de chauffage de surface (109),
en particulier dans lequel au moins un des modules de chauffage de surface (108, 109) est inférieur à 25 dm2, en particulier inférieur à 10 dm2, en outre en particulier inférieur à 2 dm2, ou moins ; et/ou
dans lequel le système électrique de chauffage de surface (101) comprend en outre au moins un dispositif choisi dans le groupe constitué de : un capteur de température, un capteur de chaleur, un capteur d'humidité, un moniteur de point de rosée.

8. Système électrique de chauffage de surface (101) selon l'une quelconque des revendications précédentes,
dans lequel l'impulsion d'énergie limitée dans le temps fournit au moins partiellement une température de 30° C, en particulier de 45° C, en outre en particulier de 55° C, en outre en particulier de 65° C, ou davantage dans et/ou au niveau du chauffage électrique de surface (100), en particulier de l'élément chauffant (120).

9. Système électrique de chauffage de surface (101) selon l'une quelconque des revendications précédentes,
dans lequel l'impulsion d'énergie limitée dans le temps fournit partiellement une température de surface de 35° C, en particulier de 30° C, ou moins au niveau du chauffage électrique de surface (100), en particulier de l'élément chauffant (120).

10. Procédé de fonctionnement d'un système électrique de chauffage de surface (101) comprenant un chauffage électrique de surface (100) avec un élément chauffant (120), dans lequel un système électrique de chauffage de surface (101) selon l'une quelconque des revendications précédentes 1 à 9 est utilisé pour la mise en œuvre du procédé, le procédé comprenant les étapes consistant à :
détecter une quantité d'énergie afin de fournir une impulsion d'énergie limitée dans le temps à l'élément chauffant (120) ; et
commander la quantité d'énergie d'une alimentation en énergie vers le chauffage électrique de surface (100) de telle manière que l'impulsion d'énergie limitée dans le temps est fournie à l'élément chauffant (120).

11. Procédé selon la revendication 10, comprenant les étapes consistant à :
commander la quantité d'énergie de l'alimentation en énergie de telle manière que l'impulsion d'énergie limitée dans le temps fournit au moins partiellement une température de 30° C, en particulier de 45° C, en outre en particulier de 55° C, en outre en particulier de 65° C, ou davantage dans et/ou au niveau du chauffage électrique de surface (100), en particulier de l'élément chauffant (120).

12. Procédé selon la revendication 10 ou 11, comprenant les étapes consistant à :
commander la quantité d'énergie de l'alimentation en énergie de telle manière que l'impulsion d'énergie limitée dans le temps fournit au moins partiellement une température de surface de 35° C, en particulier de 30° C, ou moins au chauffage électrique de surface (100), en particulier à l'élément chauffant (120).

13. Procédé selon l'une quelconque des revendications 10 à 12, comprenant en outre l'étape consistant à :
commander la quantité d'énergie de l'alimentation en énergie de telle manière que l'élément chauffant autolimitant (110) fonctionne de manière essentiellement constante en fonctionnement continu, dans lequel l'élément chauffant autolimitant (110) est commandé indépendamment de l'élément chauffant (120).

14. Procédé selon l'une quelconque des revendications 10 à 13, présentant en outre les étapes consistant à :
pendant la commande, déterminer une caractéristique de température associée au système électrique de chauffage de surface (101) ; et
réguler la quantité d'énergie de l'alimentation en énergie de telle manière que l'impulsion d'énergie limitée dans le temps est fournie à l'élément chauffant (120) en se basant sur la caractéristique de température déterminée.

15. Produit-programme informatique qui, lorsqu'il est utilisé par un ordinateur, en particulier par une unité de commande (150), est configuré pour mettre en œuvre un procédé de fonctionnement d'un système électrique de chauffage de surface (101) selon l'une quelconque des revendications 10 à 14.
